# EUROPÄISCHE PATENTSCHRIFT

(11) **EP 1 884 383 B1**
(45) Veröffentlichungstag und Bekanntmachung des Hinweises auf die Patenterteilung: **15.09.2010**
(21) Anmeldenummer: 06291249.8
(22) Anmeldetag: 31.07.2006
(51) Int. Cl.: B60H 1/22

(54) **Elektrische Heizungsanordnung, insbesondere für ein Kraftfahrzeug**
Electric heating device, in particular for a vehicle
Dispositif de chauffage électrique, en particulier pour un véhicule

(43) Veröffentlichungstag der Anmeldung: 06.02.2008
(73) Patentinhaber: Behr France Rouffach SAS, 68250 Rouffach (FR)
(72) Erfinder: Brun, Michel, 68740 Rustenhart (FR); Denny, Geoffrey, 68170 Rixheim (FR); Eckerlen, Gérard, 68250 Rouffach (FR); Gogmos, Erwan, 68000 Colmar (FR); Miss, Pascal, 67600 Sélestat (FR); Mougey, Mathieu, 68190 Ensisheim (FR); Robin, Nicolas, 67000 Strasbourg (FR); Schmittheisler, Christophe, 67680 Epfig (FR); Weingaertner, Stéphane, 68250 Pfaffenheim (FR); Risser, Michael, 68500 Guebwiller (FR)
(74) Vertreter: Nestler, Jan Hendrik

(56) Entgegenhaltungen:
- EP-A1- 1 452 357
- EP-A1- 1 542 504
- EP-A1- 1 621 378
- WO-A-03/086018
- DE-A1- 10 141 146

## Beschreibung

Die Erfindung betrifft eine elektrische Heizungsanordnung mit PTC-Elementen, insbesondere für ein Kraftfahrzeug.

PTC-Zuheizer werden in der Regel durch eine Mehrzahl von streifen- oder quaderförmigen PTC-Elementen, die zwischen Kontaktblechen und/oder Wellrippen angeordnet sind, über welche die elektrische Kontaktierung erfolgt, gebildet. Die zu erwärmende Luft nimmt hierbei die von den PTC-Elementen abgegebene Wärme im Wesentlichen von den der Vergrößerung der Wärmeübertragungsfläche vorgesehenen Wellrippen auf. Ein Beispiel einer derartigen Ausführungsform ist in der EP 1 522 439 A1 offenbart. Hierbei sind die zwischen Kontaktblechen angeordneten PTC-Elemente sowie auf der Außenseite der Kontaktbleche angeordnete Wellrippen in einem elektrisch isolierenden Kunststoff-Rahmen gehalten.

Aus der DE 101 41 146 A1 ist eine PTC-Ansteuerung bekannt, wobei die Vorrichtung modulartig aufgebaut ist aus mindestens zwei Modulen, umfassend ein aus für eine erste niedrigere Temperatur optimierte Anordnung aus PTC-Elementen gebildetes Modul, ein aus für eine zweite, höhere Temperatur optimierte Anordnung aus PTC-Elementen gebildetes Modul und ein örtlich von den PTC-Elementen unabhängig anordenbares Leistungselektronikmodul, wobei das Leistungselektronikmodul in Abhängigkeit von Steuersignalen wahlweise eines oder mehrere der PTC-Element-Module ansteuern kann. Um das Gehäuse zu schützen, sind zwei für die niedrigere Temperatur ausgelegte PTC-Element-Module vorgesehen, die außen angeordnet sind, und die weiteren, für die höhere Temperatur ausgelegten PTC-Element-Module sind innerhalb der für die niedrigere Temperatur ausgelegten PTC-Element-Module angeordnet. Die Verbindung zwischen dem Leistungselektronikmodul und den PTC-Element-Modulen kann über Steckkontakte erfolgen.

Es ist Aufgabe der Erfindung, eine verbesserte elektrische Heizungsanordnung mit elektrischen Heizelementen, insbesondere PTC-Elementen, zur Verfügung zu stellen, die insbesondere in Hinblick auf die elektrische Verschaltung einfach ausgebildet sein soll.

Diese Aufgabe wird gelöst durch eine elektrische Heizungsanordnung mit den Merkmalen des Anspruchs 1. Vorteilhafte Ausgestaltungen sind Gegenstand der Unteransprüche.

Erfindungsgemäß ist eine elektrische Heizungsanordnung, insbesondere für ein Kraftfahrzeug, mit mindestens drei, innerhalb eines vorzugsweise isolierenden Gehäuses oder Rahmens angeordneten PTC-Baugruppen vorgesehen, wobei die mittlere oder die mittleren PTC-Baugruppe(n) unabhängig von den außenseitig angeordneten, parallel zueinander geschalteten PTC-Baugruppen schaltbar sind, und die elektrische Kontaktierung mittels nur dreier Stromschienen erfolgt. Auf diese Weise sind mit einfachen Mitteln und mit einfachster Kontaktierung mittels eines dreipoligen Steckers drei Heizstufen realisierbar. Die bislang übliche, aufwändige Kontaktierung mittels einer Mehrzahl von Kabeln entfällt.

Bevorzugt hat die mittlere oder die mittleren PTC-Baugruppe(n) ein Drittel und die außenseitig angeordneten PTC-Baugruppen zwei Drittel der gesamten Heizleistung, so dass insgesamt drei unterschiedliche Heizstufen zur Verfügung stehen, nämlich die Heizstufe 1, bei der lediglich die mittleren PTC-Elemente Wärme erzeugen, die Heizstufe 2, bei der lediglich die äußeren PTC-Elemente, die beidseitig der inneren PTC-Elemente angeordnet sind, Wärme erzeugen, und die Heizstufe 3, bei der alle PTC-Elemente Wärme erzeugen. Durch die Anordnung der die Wärme im Falle der ersten Heizstufe erzeugenden PTC-Elemente im zentralen Bereich und die Anordnung der die Wärme im Falle der zweiten Heizstufe erzeugenden PTC-Elemente außenseitig hiervon ermöglicht sich in beiden Heizstufen eine ausreichend gleichmäßige Wärmeverteilung, die in jedem Fall besser ist, als wenn die PTC-Elemente der zweiten Heizstufe in einer Fläche angeordnet sind.

Die der elektrischen Kontaktierung dienenden Stromschienen sind vorzugsweise durch Bleche gebildet, welche an ihrem einen Ende Zungen aufweisen, welche in einer Steckbuchse oder einem Stecker angeordnet sind. Derartige Stromschienen lassen sich einfach mittels Stanzen und Biegen aus Blechen herstellen.

Bevorzugt sind eine erste Stromschiene, die einen Kontakt mit einer PTC-Baugruppe, eine zweite Stromschiene, die zwei Kontakte mit zwei anderen PTC-Baugruppen, und eine dritte Stromschiene vorgesehen, die Kontakte mit allen drei PTC-Baugruppen hat. Ein derartiger Aufbau ermöglicht eine sehr einfache Verschaltung, wobei lediglich ein dreipoliger Anschluss zur Verfügung gestellt werden muss. Im Vergleich zu üblichen Verschaltungen sind keine sechs, sondern nur ein entsprechend ausgebildetes Kabel, das mit dem Stecker verbunden ist, erforderlich.

Vorzugsweise sind an einem Ende der Kontaktbleche Federzungen angeordnet, welche in Kontakt mit einem Ende der Stromschienen sind. Dies ermöglicht einen sehr einfachen und sicheren elektrischen Kontakt und erleichtert das Zusammenbauen der Heizungsanordnung.

Bei den platten-, streifen- oder quaderförmig ausgebildeten PTC-Element handelt es sich vorzugsweise um ein Keramik-PTC-Element. Diese lassen sich besonders einfach in derartigen blockartigen Formen herstellen. Eine weitere Bearbeitung im Rahmen der Herstellung der Heizungsanordnung ist nicht erforderlich. Die PTC-Elemente können einfach zwischen zwei Kontaktbleche eingeklebt oder auf andere Weise mit denselben verbunden werden. Die elektrische Kontaktierung kann jedoch auch direkt über entsprechend ausgebildete Wellrippen erfolgen, welche die wärmeübertragende Fläche vergrößern.

Prinzipiell kann es sich bei den PTC-Elementen auch um netz- oder wabenförmig, aber auch um platten-, streifen- oder quaderförmig ausgebildete PTC-Elemente aus Kunststoff handeln. Die elektrische Kontaktierung kann - wie im Falle der vorstehend genannten Keramik-PTC-Elemente - über Metallstreifen o.ä. erfolgen, die beispielsweise in den Rahmen eingelegt oder an demselben angebracht sind. Um eine gleichmäßige Stromversorgung über die gesamte Fläche des PTC-Elements zu ermöglichen, können weitere Maßnahmen, wie beispielsweise das Vorsehen elektrisch sehr gut leitender Beschichtungen, vorgesehen sein.

Die Stromschienen sind vorzugsweise in einem Zwischenbauteil als Vorbaugruppe angeordnet, das in eine Aufnahme des Rahmens einfügbar und mit einem Deckel verschließbar ist. Hierbei dient der Deckel bevorzugt auch der Fixierung der PTC-Baugruppen. Ein zweiter Deckel kann die PTC-Baugruppen auf der gegenüberliegenden Seite im Rahmen fixieren. Die Deckel können aufgeclipst oder auf sonstige Weise mit dem Rahmen verbunden werden, bspw. mittels Schrauben.

Der Rahmen besteht vorzugsweise aus Polyamid, insbesondere bevorzugt aus PA66, und ist spritzgegossen.

Erfindungsgemäße Heizungsanordnungen können sowohl als Zuheizer in Verbindung mit einer herkömmlichen Klimaanlage oder einem herkömmlichen Heizer als auch in Alleinstellung vorgesehen sein.

Im Folgenden wird die Erfindung anhand eines Ausführungsbeispiels unter Bezugnahme auf die Zeichnung im Einzelnen erläutert. In der Zeichnung zeigen:

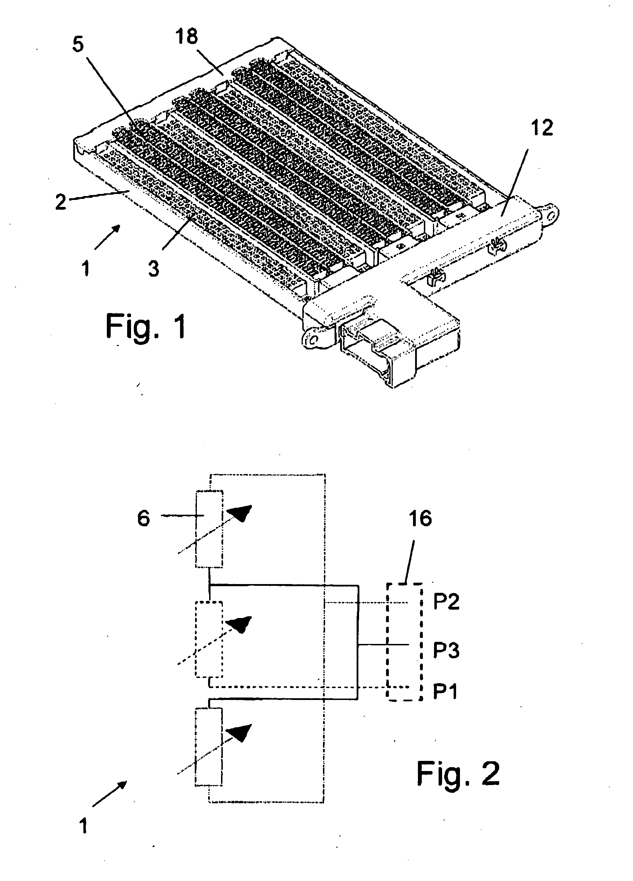

- Fig. 1: eine perspektivische Darstellung einer erfindungsgemäßen Heizungsanordnung gemäß dem Ausführungsbeispiel,
- Fig. 2: eine schematische Darstellung der elektrischen Verschaltung der Heizungsanordnung von Fig. 1,
- Fig. 3: eine perspektivische Ansicht eines Teils der elektrischen Kontaktierung,
- Fig. 4a-c: perspektivische Ansichten zur Verdeutlichung des Zusammenbaus des Teiles von Fig. 3,
- Fig. 5a-e: perspektivische Ansichten zur Verdeutlichung des weiteren Zusammenbaus der Heizungsanordnung von Fig. 1, wobei in Fig. 5c bis 5e zusätzlich ein Stecker zur Stromversorgung schematisch dargestellt ist,
- Fig. 6: eine perspektivische Ansicht einer ersten Stromschiene,
- Fig. 7: eine perspektivische Ansicht einer zweiten Stromschiene,
- Fig. 8: eine perspektivische Ansicht einer dritten Stromschiene,

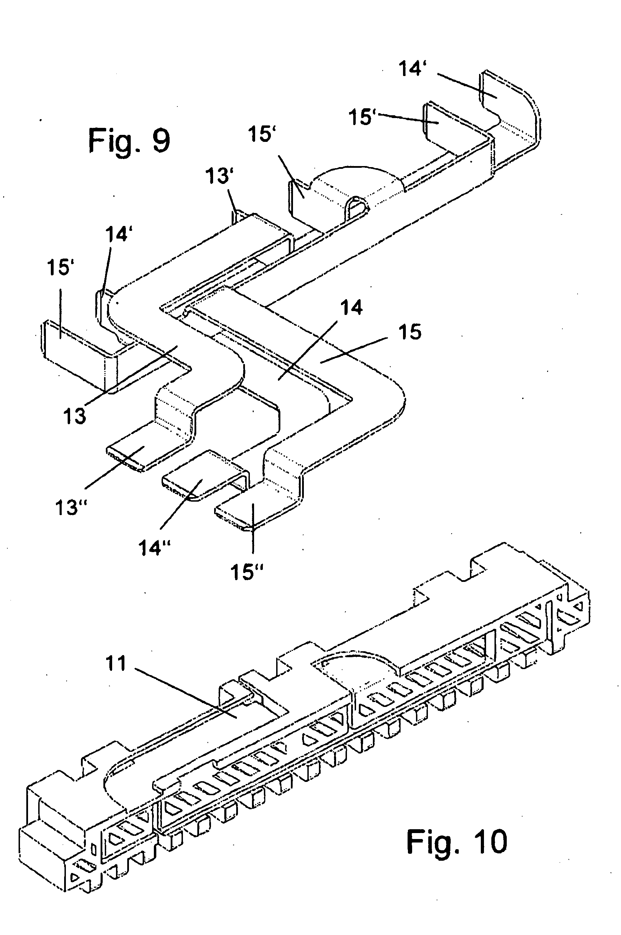

- Fig. 9: eine perspektivische Ansicht der Stromschienen der Figuren 6 bis 8 ohne Gehäuse,
- Fig. 10: eine perspektivische Ansicht des Gehäuses für die Stromschienen,

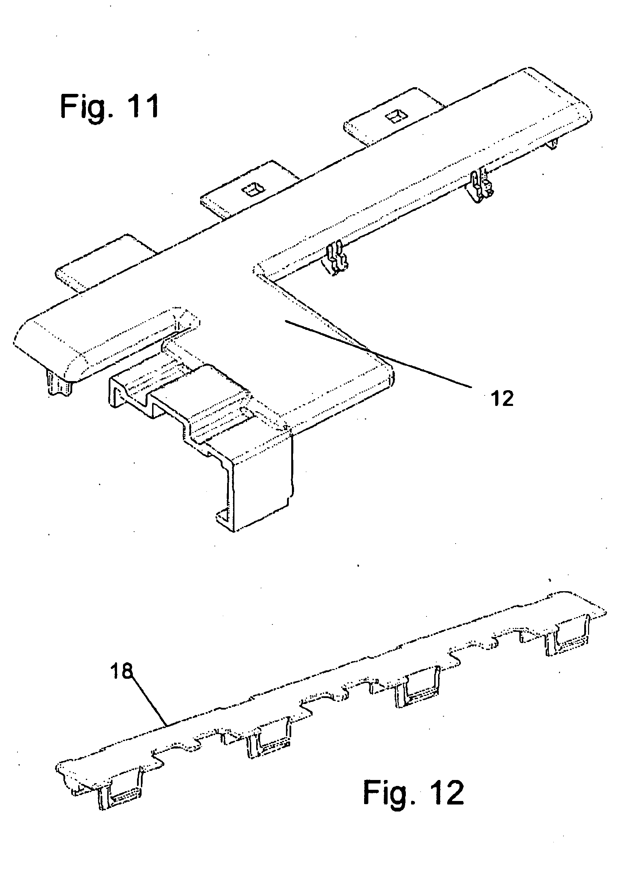

- Fig. 11: eine perspektivische Ansicht des Deckels zum Gehäuse von Fig. 10,
- Fig. 12: eine perspektivische Ansicht des Einsatzes in den Rahmen auf der gegenüberliegenden Seite des Gehäuses von Fig. 10, und
- Fig. 13: eine perspektivische Ansicht einer PTC-Heizgruppe.

Eine Heizungsanordnung 1 gemäß dem ersten Ausführungsbeispiel dient als Zuheizer in einer Kraftfahrzeug-Klimaanlage, wobei sie in Luftströmungsrichtung gesehen nach einem herkömmlichen Heizer angeordnet ist.

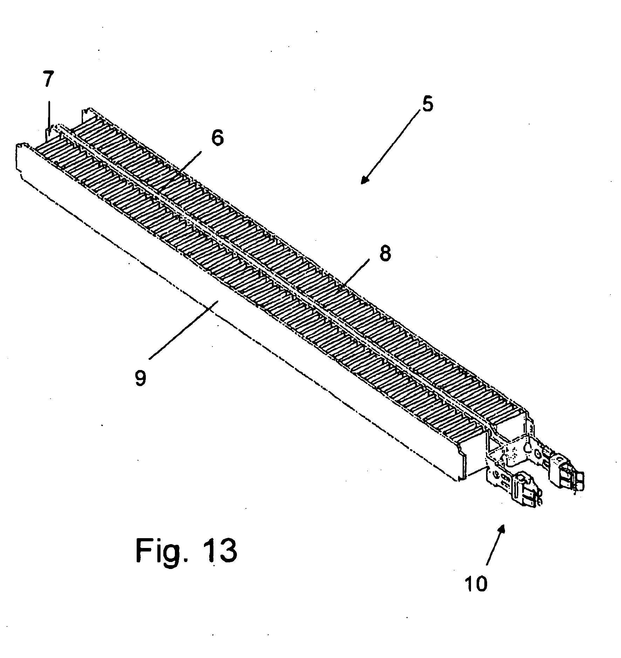

Die Heizungsanordnung 1 weist einen einstückigen Rahmen 2 aus Kunststoff auf, vorliegend aus PA66, der spritzgegossen ist. Der Rahmen 2 ist - abgesehen von den in Zusammenhang mit der elektrischen Kontaktierungen stehenden Bereichen - im Wesentlichen spiegelbildlich bezüglich der Mittellängsachse ausgebildet. Der Rahmen 2 weist vier parallel zueinander und zur Mittellängsachse angeordnete und beabstandet voneinander ausgebildete Bereiche mit jeweils einer Vielzahl von Durchtrittsöffnungen 3 von quadratischem Querschnitt auf. Zwischen diesen Bereichen sind drei Öffnungen 4 im Rahmen 2 ausgebildet, in welche jeweils eine von drei PTC-Baugruppen 5, von denen eine in Fig. 13 in Alleinstellung dargestellt ist, eingelegt ist. Die PTC-Baugruppe 5 ist vorliegend eingeclipst, kann jedoch auch auf beliebige andere Weise im Rahmen 2 gehalten werden.

Wie aus Fig. 13 ersichtlich, weist jede PTC-Baugruppe 5 ein langgestrecktes PTC-Element 6, zwei Kontaktbleche 7, zwei Wellrippen 8 und zwei äußere Bleche 9 auf, wobei jeweils ein Kontaktblech 7, eine Wellrippe 8 und ein Blech 9 miteinander verlötet sind, und das PTC-Element 6 mittels eines elektrisch leitenden Klebstoffs zwischen die Kontaktbleche 7 eingeklebt ist. An Stelle eines langgestreckten PTC-Elements können auch mehrere blockförmige PTC-Elemente mit gleicher Höhe und Breite nebeneinander angeordnet sein, wobei in Längsrichtung ggf, auch ein gewisser Abstand zwischen den einzelnen PTC-Elementen vorgesehen sein kann.

Die Kontaktbleche 7 und Bleche 9 ragen in Längsrichtung etwas über die Wellrippen 8 und das PTC-Element 6 hinaus, wobei sich jeweils die Breite derselben in einer Stufe leicht verringert, so dass eine definierte Anlage an einem entsprechend dimensionierten Rand des Rahmens 2 gegeben ist. Die beiden Kontaktbleche 7 weisen hierbei jeweils ein auf einer Seite weiter herausragendes, auseinandergebogenes und mit Federzungen versehenes Ende 10 auf, über welches die elektrische Kontaktierung erfolgt.

Der Aufbau aller drei PTC-Baugruppen 5 ist vorliegend gleich, jedoch sind - entsprechend der gewünschten Aufteilung der Heizleistung - auch unterschiedliche PTC-Baugruppen möglich, wobei vorzugsweise die äußeren beiden PTC-Baugruppen 5 spiegelbildlich zur Mittellängsachse der Heizungsanordnung ausgebildet sind.

Für die elektrische Kontaktierung der PTC-Baugruppen 5, d.h. für einen elektrischen Kontakt mit den Federzungen der Enden 10 der Kontaktbleche 7 sind auf einer Seite des Rahmens 2 in einem isolierenden Zwischenbauteil 11, das in einer im Rahmen 2 ausgebildeten Aufnahme angeordnet ist und mit Deckel 12 verschlossen wird, Stromschienen 13, 14 und 15 angeordnet, die mit einem oder mehreren Enden 13', 14', 15' zwischen den Federzungen der Kontaktbleche 7 aufgenommen sind und mit einem anderen Ende 13", 14", 15" die elektrischen Kontakte einer Steckbuchse 16 für einen Stecker 17 bilden. Der Deckel 12 dient der abschließenden Fixierung der Stromschienen 13, 14, 15 und auch der PTC-Baugruppen 5, wobei der Deckel 12 vorliegend am Rahmen 2 festgeclipst wird. Auf der anderen Seite des Rahmens 2 werden die PTC-Baugruppen 5 mit Hilfe eines zweiten Deckels 18 fixiert, der ebenfalls am Rahmen 2 festgeclipst wird.

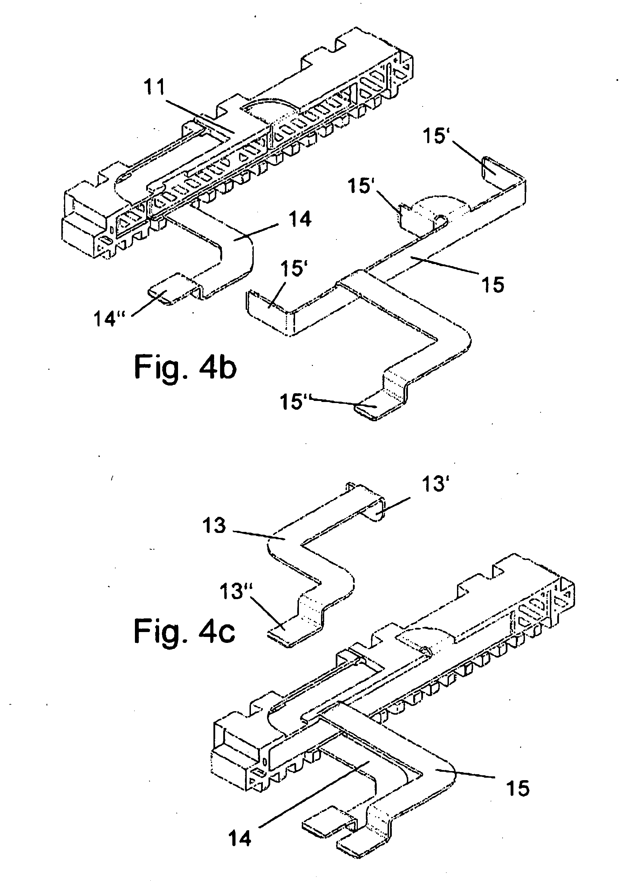

Die erste, in Fig. 4c dargestellte Stromschiene 13 weist ein Ende 13' auf, mit welchem sie in Kontakt mit den Federzungen eines der Kontaktbleche 7 der mittleren PTC-Baugruppe 5 steht. Mit dem anderen Ende 13" ist die erste Stromschiene 13 mit einem ersten Pol P1 des Steckers 17 verbindbar.

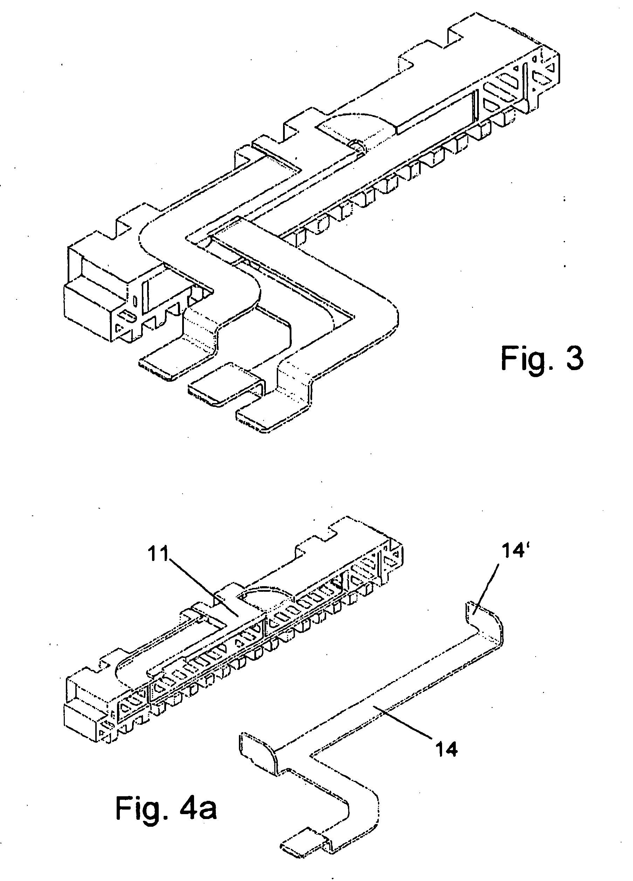

Die zweite, in Fig. 4a dargestellte Stromschiene 14 weist zwei Enden 14' auf, mit welchen sie in Kontakt mit den Federzungen jeweils eines der Kontaktbleche 7 der äußeren PTC-Baugruppen 5 steht. Mit dem gegenüberliegenden Ende 14" ist die zweite Stromschiene 14 mit dem zweiten Pol P2 des Steckers 17 verbindbar.

Die dritte, in Fig. 4b dargestellte Stromschiene 15 weist drei Enden 15' auf, mit welchen sie in Kontakt mit den Federzungen der jeweils anderen Kontaktbleche 7 der mittleren und der äußeren PTC-Baugruppen 5 steht. Mit dem gegenüberliegenden Ende 15" ist die dritte Stromschiene 15 mit dem dritten Pol P3 des Steckers 17 verbindbar, wobei es sich vorliegend um die Masse handelt.

Bei allen drei Stromschienen 13, 14, 15 handelt es sich vorliegend um Stanzbiegeteile aus Blech, die sehr kostengünstig herstellbar sind.

Je nach angeforderter Heizleistung, fließt der Strom durch die erste Stromschiene 13 und den entsprechenden Teil der dritten Stromschiene 15 (Heizstufe 1), durch die zweite Stromschiene 14 und den entsprechenden Teil der dritten Stromschiene 15 (Heizstufe 2, vorliegend doppelte Heizleistung bezüglich Heizstufe 1) oder durch sämtliche Stromschienen 13, 14, 15 (Heizstufe 3, maximale Heizleistung), so dass sich ein sehr einfacher dreistufiger Zuheizer ergibt.

Der Zusammenbau des Zuheizers erfolgt folgendermaßen: zuerst wird die zweite Stromschiene 14 in das entsprechend mit Aufnahmen ausgebildete Zwischenbauteil 11 von unten her eingesetzt (Fig. 4a), wobei die Enden 14', die in Kontakt mit den Federzungen der Kontaktbleche 7 stehen sollen, nach oben gebogen sind. Anschließend wird von vorne, also in Richtung der Längserstreckung der PTC-Baugruppen 5, die dritte Stromschiene 15 oberhalb der zweiten Stromschiene 14 eingeführt (Fig. 4b), so dass sich die Stromschienen 14 und 15 nicht kontaktieren.

Um die drei, die entsprechenden Federzungen der Kontaktbleche 7 kontaktierenden Enden 15' der dritten Stromschiene 15 entsprechend auszurichten, ist das die Stromschiene 15 bildende Blech mehrfach umgebogen, so dass sich drei nach vorne stehenden Enden 15' ergeben, welche sich jeweils parallel zu den Enden 14' der zweiten Stromschiene 14 und zum Ende 13' der ersten Stromschiene 13 erstrecken. Hierfür ist ein langgestreckter Verteilerbereich 15"' nach unten gebogen, die äußeren Enden 15' nach vorne gebogen und für das innen angeordnete Ende 15' ein bogenartiger Bereich zuerst nach vom und anschließend nach unten gebogen, so dass alle Enden 15' parallel zueinander angeordnet sind.

Als drittes wird die erste Stromschiene 13 von oben her auf das Zwischenbauteil 11 aufgesetzt. Hierbei ist das die Federzungen des entsprechenden Kontaktblechs 7 kontaktierende Ende nach unten umgebogen.

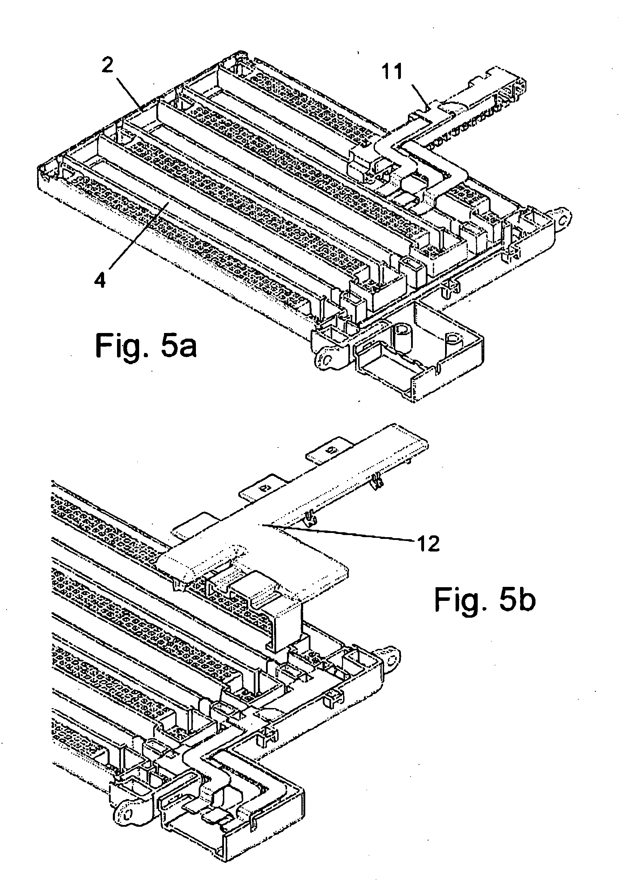

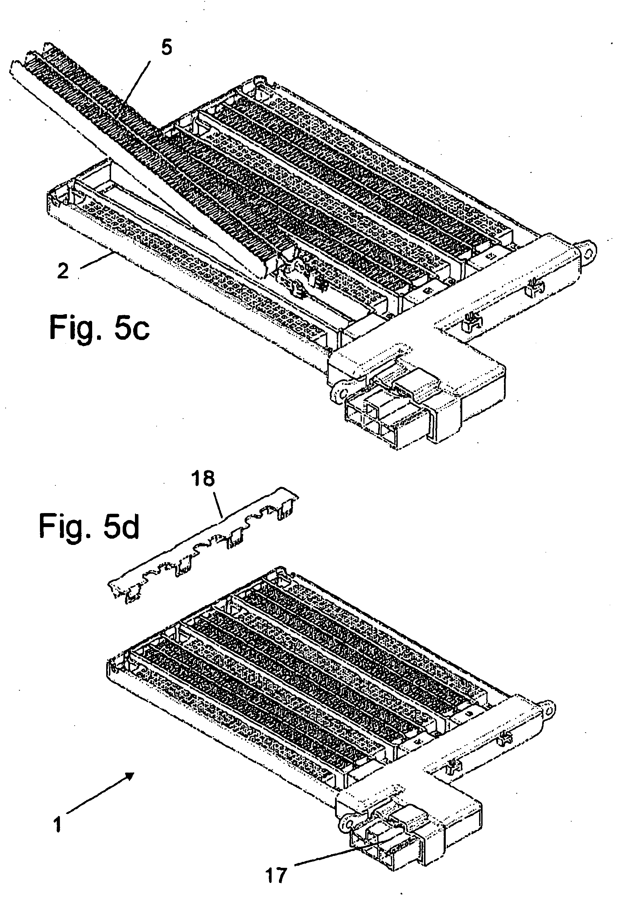

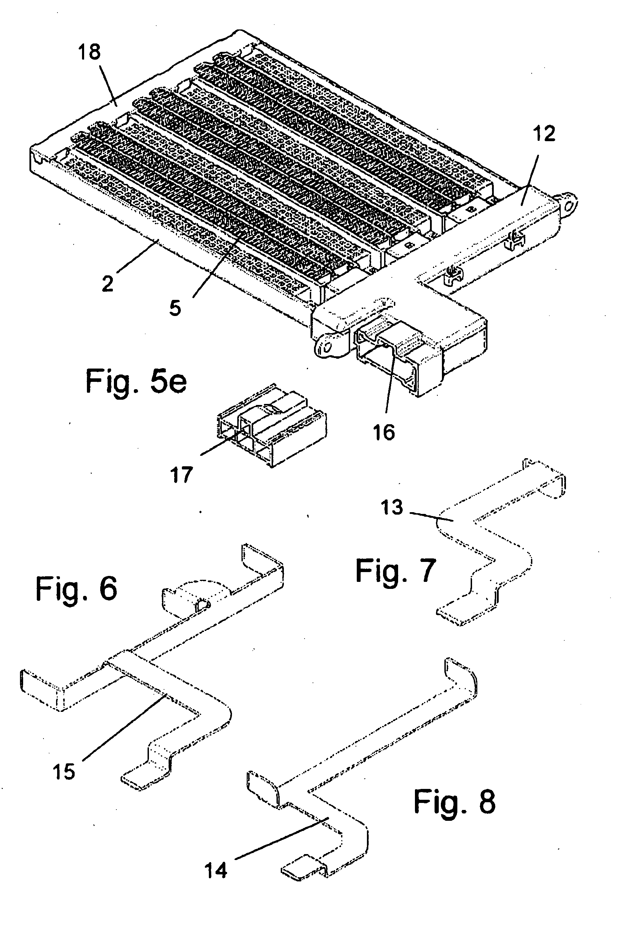

Anschließend wird die Vorbaugruppe, bestehend aus dem Zwischenbauteil 11 und den Stromschienen 13, 14, 15 in die Aufnahme des Rahmens 2 eingesetzt (Fig. 5a). Nachfolgend wird der Deckel 12 aufgeclipst (Fig. 5b). Anschließend werden die drei PTC-Baugruppen 5 eingesetzt, so dass die Enden 13', 14' und 15' jeweils in Kontakt mit den Federzungen an den entsprechenden Kontaktblechen 7 sind (Fig. 5c). Nach dem Einsetzen der PTC-Baugruppen 5 werden dieselben durch das Aufsetzen und Verclipsen des zweiten Deckels 18 auf der Seite fixiert, die der elektrischen Kontaktierung gegenüberliegenden (Fig. 5d). Die elektrische Kontaktierung erfolgt über den Stecker 17, der in die Steckbuchse 16 eingesetzt wird, wobei in Fig. 5e keine Stromzuführungen dargestellt sind.

## Patentansprüche

1. Elektrische Heizungsanordnung (1), insbesondere für ein Kraftfahrzeug, mit mindestens drei innerhalb eines vorzugsweise isolierenden Gehäuses oder Rahmens (2) angeordneten PTC-Baugruppen (5), **dadurch gekennzeichnet, dass** die mittlere oder die mittleren PTC-Baugruppe(n) (5) unabhängig von den außenseitig angeordneten, parallel zueinander geschalteten PTC-Baugruppen (5) schaltbar sind, wobei die elektrische Kontaktierung mittels zur dreier Stromschienen (13, 14, 15) erfolgt.

2. Heizungsanordnung nach Anspruch 1, **dadurch gekennzeichnet, dass** die mittlere oder die mittleren PTC-Baugruppe(n) ein Drittel und die außenseitig angeordneten PTC-Baugruppen (5) zwei Drittel der gesamten Heizleistung haben, so dass drei unterschiedliche Heizstufen zur Verfügung stehen.

3. Heizungsanordnung nach Anspruch 1 oder 2, **dadurch gekennzeichnet, dass** die Stromschienen (13, 14, 15) durch Bleche gebildet sind, welche an ihrem einen Ende (13", 14", 15") Zungen aufweisen, welche in einer Steckbuchse (16) oder einem Stecker angeordnet sind.

4. Heizungsanordnung nach einem der vorhergehenden Ansprüche, **dadurch gekennzeichnet, dass** eine erste Stromschiene (13) einen Kontakt mit einer PTC-Baugruppe (5), eine zweite Stromschiene (14) zwei Kontakte mit zwei anderen PTC-Baugruppen (5) und eine dritte Stromschiene (15) Kontakte mit allen drei PTC-Baugruppen (5) hat.

5. Heizungsanordnung nach einem der vorhergehenden Ansprüche, **dadurch gekennzeichnet, dass** an einem Ende der Kontaktbleche (7) Federzungen angeordnet sind, welche in Kontakt mit einem Ende (13', 14', 15') der Stromschienen (13, 14, 15) sind.

6. Heizungsanordnung nach einem der vorhergehenden Ansprüche, **dadurch gekennzeichnet, dass** mindestens eine der PTC-Baugruppen (5) mindestens ein platten-, streifen- oder quaderförmig ausgebildetes PTC-Element (6), insbesondere Keramik-PTC-Element und/oder Kunststoff-PTC-Element, aufweist.

7. Heizungsanordnung nach Anspruch 6, **dadurch gekennzeichnet, dass** benachbart des platten-, streifen- oder quaderförmigen PTC-Elements und/oder eines das PTC-Element (6) kontaktierenden Kontaktblechs (7) mindestens eine Wellrippe (8) angeordnet ist, die von zu erwärmender Luft umströmbar ist.

8. Heizungsanordnung nach Anspruch 6 oder 7, **dadurch gekennzeichnet, dass** mehrere platten-, streifen- oder quaderförmige PTC-Elemente (6) in einer Reihe zwischen Kontaktblechen (7) und/oder Wellrippen angeordnet sind.

9. Heizungsanordnung nach einem der vorhergehenden Ansprüche, **dadurch gekennzeichnet, dass** die Stromschienen (13, 14, 15) in einem Zwischenbauteil (11) angeordnet sind, das in eine Aufnahme des Rahmens (2) einfügbar und mit einem Deckel (12) verschließbar ist.

10. Heizungsanordnung nach einem der vorhergehenden Ansprüche, **dadurch gekennzeichnet, dass** die Stromschienen (13, 14, 15) in oder an einem Zwischenbauteil (11) positioniert sind, und das Zwischenbauteil (11) in eine im Gehäuse oder Rahmen (2) ausgebildete Aufnahme einsetzbar ist, welche von einem Deckel (12) verschließbar ist.

11. Heizungsanordnung nach einem der vorhergehenden Ansprüche, **dadurch gekennzeichnet, dass** der Rahmen (2) aus Polyamid, insbesondere aus PA66, spritzgegossen ist.

## Claims

1. Electric heating device (1), in particular for a motor vehicle, comprising at least three PTC assemblies (5) disposed inside a preferably insulated housing or frame (2), **characterized in that** the center PTC assembly or assemblies (5) can be switched independently of the outer PTC assemblies (5) connected in parallel to each other, wherein electric contacting is carried out by way of only three bus bars (13, 14, 15).

2. The heating device according to claim 1, **characterized in that** the center PTC assembly or assemblies have one third and the outer PTC assembly or assemblies have two thirds of the overall heating capacity, so that three different heating levels are available.

3. The heating device according to claim 1 or 2, **characterized in that** the bus bars (13, 14, 15) are formed by metal sheets which comprise tongues at one end (13", 14", 15") thereof, the tongues being disposed in a socket (16) or a connector.

4. A heating device according to any one of the preceding claims, **characterized in that** a first bus bar (13) has one contact with one PTC assembly (5), a second bus bar (14) has two contacts with two other PTC assemblies (5), and a third bus bar (15) has contacts with all three PTC assemblies (5).

5. A heating device according to any one of the preceding claims, **characterized in that** spring tabs, which are in contact with an end (13', 14', 15') of the bus bars (13, 14, 15), are disposed at one end of the contact plates (7).

6. A heating device according to any one of the preceding claims, **characterized in that** at least one of the PTC assemblies (5) comprises a plate-, strip-, or cuboid-shaped PTC element (6), in particular a ceramic PTC element and/or a plastic PTC element.

7. The heating device according to claim 6, **characterized in that** at least one undulated rib (8), around which air to be heated can flow, is disposed adjacent to the plate-, strip- or cuboid-shaped PTC element and/or to a contact plate (7) contacting the PTC element (6).

8. The heating device according to claim 6 or 7, **characterized in that** a plurality of plate-, strip-, or cuboid-shaped PTC elements (6) are disposed in a row between the contact plates (7) and/or undulated ribs.

9. A heating device according to any one of the preceding claims, **characterized in that** the bus bars (13, 14, 15) are disposed in an intermediate component (11), which can be inserted into a seat of the frame (2) and closed with a cover (12).

10. A heating device according to any one of the preceding claims, **characterized in that** the bus bars (13, 14, 15) are positioned in or on an intermediate component (11), and the intermediate component (11) can be inserted into a seat that is configured in the housing or frame (2) and that can be closed with a cover (12).

11. A heating device according to any one of the preceding claims, **characterized in that** the frame (2) is injection-molded from polyamide, particularly PA66.

## Revendications

1. Dispositif de chauffage électrique (1), en particulier pour un véhicule automobile, comprenant au moins trois ensembles (5) à coefficient de température positif (CTP) disposés à l'intérieur d'un carter ou cadre (2), de préférence isolant,
**caractérisé en ce que** l'ensemble central ou les ensembles centraux (5) à coefficient de température positif (CTP) peut ou peuvent être actionné(s) indépendamment des ensembles (5) à coefficient de température positif (CTP) disposés à l'extérieur et montés en parallèle les uns par rapport aux autres, où la mise en contact électrique se produit au moyen seulement de trois barres conductrices (13, 14, 15).

2. Dispositif de chauffage selon la revendication 1, **caractérisé en ce que** l'ensemble central ou les ensembles centraux à coefficient de température positif (CTP) ont un tiers, et les ensembles (5) à coefficient de température positif (CTP), disposés à l'extérieur, deux tiers de la puissance de chauffage totale, de sorte que l'on dispose de trois niveaux de chauffage différents.

3. Dispositif de chauffage selon la revendication 1 ou 2, **caractérisé en ce que** les barres conductrices (13, 14, 15) sont formées par des tôles qui, au niveau de l'une de leurs extrémités (13", 14", 15"), présentent des languettes qui sont disposées dans une prise femelle (16) ou dans une prise mâle.

4. Dispositif de chauffage selon l'une quelconque des revendications précédentes, **caractérisé en ce qu'**une première barre conductrice (13) a un contact avec un ensemble (5) à coefficient de température positif (CTP), une deuxième barre conductrice (14) ayant deux contacts avec deux autres ensembles (5) à coefficient de température positif (CTP), une troisième barre conductrice (15) ayant des contacts avec la totalité des trois ensembles (5) à coefficient de température positif (CTP).

5. Dispositif de chauffage selon l'une quelconque des revendications précédentes, **caractérisé en ce que** des languettes faisant ressort sont disposées au niveau d'une extrémité des tôles de contact (7), languettes faisant ressort qui sont en contact avec une extrémité (13', 14', 15') des barres conductrices (13, 14, 15).

6. Dispositif de chauffage selon l'une quelconque des revendications précédentes, **caractérisé en ce qu'**au moins l'un des ensembles (5) à coefficient de température positif (CTP) présente au moins un élément (6) à coefficient de température positif (CTP), en particulier un élément en céramique à coefficient de température positif (CTP) et / ou un élément en matière plastique à coefficient de température positif (CTP), configuré en forme de plaque, de bande ou de parallélépipède rectangle.

7. Dispositif de chauffage selon la revendication 6, **caractérisé en ce qu'**au moins une ailette ondulée (8) est disposée de façon adjacente à l'élément à coefficient de température positif (CTP) en forme de plaque, de bande ou de parallélépipède rectangle et / ou de façon adjacente à une tôle de contact (7) venant au contact de l'élément (6) à coefficient de température positif (CTP), ailette ondulée qui peut être entourée par de l'air à chauffer.

8. Dispositif de chauffage selon la revendication 6 ou 7, **caractérisé en ce que** plusieurs éléments (6) à coefficient de température positif (CTP), en forme de plaque, de bande ou de parallélépipède rectangle, sont disposés sur une rangée, entre des tôles de contact (7) et / ou des ailettes ondulées.

9. Dispositif de chauffage selon l'une quelconque des revendications précédentes, **caractérisé en ce que** les barres conductrices (13, 14, 15) sont disposées dans un composant intermédiaire (11) qui peut être inséré dans un logement du cadre (2) et fermé par un couvercle (12).

10. Dispositif de chauffage selon l'une quelconque des revendications précédentes, **caractérisé ce que** les barres conductrices (13, 14, 15) sont positionnées dans ou sur un composant intermédiaire (11), et le composant intermédiaire (11) peut être introduit dans un logement configuré dans le carter ou le cadre (2), logement qui peut être fermé par un couvercle (12).

11. Dispositif de chauffage selon l'une quelconque des revendications précédentes, **caractérisé en ce que** le cadre (2) en polyamide, en particulier en PA66, est moulé par injection.
